# EUROPÄISCHE PATENTANMELDUNG

(11) **EP 2 330 478 A1**
(43) Veröffentlichungstag der Anmeldung: **08.06.2011**
(21) Anmeldenummer: 09014867.7
(22) Anmeldetag: 01.12.2009
(51) Int. Cl.: G06F 1/04, G11C 7/22

(54) **Schaltung und Verfahren zum Bestimmen eines Wertes, insbesondere einer Dauer eines Messsignals**

(71) Anmelder: VEGA Grieshaber KG, 77709 Wolfach (DE)
(72) Erfinder: Mellert, Martin, 77790 Steinach (DE)
(74) Vertreter: Göhring, Robert

(57) **Zusammenfassung**

Die Erfindung bezieht sich auf ein Verfahren und eine Schaltung zum Bestimmen eines Wertes (x), insbesondere einer Dauer, eines Messsignals (ms), wobei
- ein Zeitgeber (T) ausgestaltet ist bei einem ersten Zähltakt-Zustandswechsel eines Zähltakts (clk) ein Steuersignal (s0) an zumindest ein erstes von zumindest zwei Verzögerungsgliedern (G1, G2, G3, G4) anzulegen,
- die Verzögerungsglieder (G1, G2, G3, G4) ausgestaltet sind zeitlich zueinander unterschiedlich verzögerte Vergleichssignale (s1, s2, s3, s4) zu erzeugen und
- eine Komparatoranordnung mit zumindest einem Komparator (K1, K2, K3, K4) mit Komparatoreingängen zum Anlegen der unterschiedlich verzögerten Vergleichssignale (s1; s2; s3; s4) und des momentanen Messsignals (ms) ausgelegt ist aus dem jeweils anliegenden Vergleichssignal (s1; s2; s3; s4) und dem Messsignal (ms) jeweils ein Vergleichsergebnis (v1, v2, v3, v4) zu bestimmen, wobei die Abfolge der Vergleichsergebnisse (v1, v2, v3, v4) einen Differenzwert (x1) des Messsignals (ms) bildet.

## Beschreibung

Die Erfindung bezieht sich auf eine Schaltung und ein Verfahren zum Bestimmen eines Wertes, insbesondere einer Dauer eines Messsignals.

Allgemein bekannt ist eine Messwertbestimmung bei Sensoren durch Frequenzmessung mit einer Messwertauflösung, welche durch eine Frequenz eines Zähltaktes und eine Dauer eines Messsignals bzw. eine Dauer eines Zustands eines Messsignals bestimmt ist. Ein Zeitgeber bestimmt dabei die Dauer des Messsignals anhand der Dauer der gezählten Perioden des Zähltaktes. Dadurch bedingt ist eine Genauigkeit der Messwertauflösung des Zählergebnisses auf die Dauer der Periode des Zähltaktes begrenzt. Bei einem sich insbesondere periodisch wiederholenden Messsignal mit einer Messfrequenz wird die Messwertauflösung durch die Frequenz des Zeitgebers bzw. Zähltaktes und durch die Messzeit bzw. Messdauer bestimmt. Läuft der Zeitgeber bzw. der Zähltakt mit einer Frequenz von 1 MHz und soll eine Auflösung von 14 Bit erreicht werden, so dauert eine Messung 1 µs x 2¹⁴ = 16.384 ms.

Soll die Auflösung erhöht werden, ist eine höhere Messzeit erforderlich bzw. es ist ein Zeitgeber erforderlich, welcher mit einer höheren Taktrate arbeitet. Der Einsatz eines Zeitgebers mit einer höheren Taktrate ist jedoch mit einem zusätzlichen Stromverbrauch verbunden.

Die Aufgabe der Erfindung besteht darin, eine Schaltung bzw. ein Verfahren bereitzustellen, welche mit einfachen Mitteln eine höhere Auflösung ermöglichen, wobei insbesondere eine Erhöhung des Stromverbrauchs möglichst gering ausfallen soll.

Diese Aufgabe wird durch die Schaltung zum Bestimmen eines Wertes, insbesondere einer Dauer eines Messsignals, mit den Merkmalen des Patentanspruchs 1 bzw. durch das Verfahren zum Bestimmen eines Wertes, insbesondere einer Dauer eines Messsignals mit den Merkmalen des Patentanspruchs 12 gelöst. Eigenständig vorteilhaft ist ein System mit einem Sensor und einer solchen Schaltung oder Verfahrensweise. Vorteilhafte Ausgestaltungen sind Gegenstand von abhängigen Ansprüchen.

Bevorzugt wird demgemäß eine Schaltung zum Bestimmen eines Wertes, insbesondere einer Dauer, eines Messsignals, bei welcher ein Zeitgeber ausgestaltet oder gesteuert ist bei einem ersten Zähltakt-Zustandswechsel eines Zähltakts ein Steuersignal an zumindest ein erstes von zumindest zwei Verzögerungsgliedern anzulegen. Die Verzögerungsglieder sind ausgestaltet oder gesteuert zeitlich zueinander unterschiedlich verzögerte Vergleichssignale zu erzeugen. Eine Komparatoranordnung der Schaltung mit zumindest einem Komparator, wobei ein jeweils erster Komparatoreingang zum Anlegen eines dieser unterschiedlich verzögerten Vergleichssignale geschaltet ist und ein jeweils zweiter Komparatoreingang zum Anlegen des Messsignals geschaltet ist, ist ausgelegt oder gesteuert aus dem jeweils anliegenden Vergleichssignal und dem Messsignal jeweils ein Vergleichsergebnis zu bestimmen, wobei die Abfolge der Vergleichsergebnisse einen Differenzwert des Messsignals bildet.

Eine solche Schaltung ermöglicht auf einfache Art und Weise die Bestimmung eines Differenzwertes, welcher sich am Ende der Dauer eines Zustands des Messsignals in dem Zeitbereich innerhalb einer Zähltaktperiode ergibt. Eine Genauigkeitsauflösung ergibt sich dabei durch die Anzahl der verwendeten Verzögerungsglieder bzw. Vergleichsergebnisse. Der Einsatz von nur zwei Verzögerungsgliedern bietet eine Genauigkeitserhöhung um den Faktor 2, da das Ende eines Signalzustands des Messsignals auf eine halbe Taktperiode genau erfasst werden kann. Der Einsatz von drei Verzögerungsgliedern ermöglicht eine Genauigkeit bis zu einer Drittel-Taktperiode usw. Einfach bestimmbar ist somit eine zumindest bestimmbare Messfrequenz bzw. Dauer des Zustands eines Messsignals ab einem letzten zu zählenden Zustandswechsel des Zähltakts.

Unter der Angabe, dass Komponenten wie der Zeitgeber oder die Verzögerungsglieder ,,ausgestaltet oder gesteuert" sind, ist zu verstehen, dass derartige Komponenten mittels reiner Hardware-Komponenten ausgestaltet werden können, wobei jedoch genauso eine Ausgestaltung durch entsprechend gesteuerte Prozessoren oder eine Kombination aus so genannter Hardware und Software, insbesondere Firmware, eingebettet werden kann. Die Komponentenmerkmale ergeben sich somit aus der jeweils zum Aufbau einer solchen Schaltung verwendeten Technologie. Sofern eine Steuerung von Komponenten vorgesehen ist, ist zweckmäßigerweise auch ein entsprechender Algorithmus bzw. ein entsprechendes Steuerprogramm in einem Speicherbereich der Schaltung hinterlegt, um die Komponenten entsprechend ansteuern zu können.

Bevorzugt wird eine Komparatoranordnung mit jeweils einem Komparator pro Verzögerungsglied, so dass jedem der Komparatoren ein Vergleichssignal und das jeweils momentane Messsignal anliegt. Äquivalent dazu ist jedoch auch eine Anordnung ausgestaltbar, bei welcher ein einzelner Komparator zeitlich aufeinanderfolgend die verschiedenen der zeitlich verzögerten Vergleichssignale angelegt bekommt und mit dem momentanen Wert des Messsignals vergleicht. In diesem Fall wird zweckmäßigerweise eine Speicherung der aufeinander folgenden Vergleichsergebnisse in verschiedenen Registerplätzen eines Registers vorgenommen. Jedoch kann auch eine Speicherung der verschiedenen Vergleichsergebnisse verschiedener solcher Komparatoren vorteilhaft in einem Register vorgesehen sein.

Unter dem Begriff des "Differenzwertes" wird entsprechend ein Wert einer Dauer des Messsignals verstanden, über welche das Messsignal seinen Zustand innerhalb der Taktperiode und im Rahmen der Auflösungsgenauigkeit beibehält.

Unter dem Begriff des "Zähltakts" wird ein Takt verstanden, welcher gemäß einer bevorzugten Anwendung zum Zählen bzw. Bestimmen einer Dauer eines Zustands des Messsignals verwendet wird. Es muss sich dabei jedoch nicht um einen eigenständigen Takt handeln. Auch ein für sich genommen in der Schaltung vorhandener Takt kann als der Zähltakt verwendet werden.

Bevorzugt wird eine Schaltung, bei welcher von einem zweiten oder weiteren solchen Verzögerungsglied ein Eingang des Verzögerungsglieds zum Anlegen des Steuersignals mit einem Ausgang zum Ausgeben des Vergleichssignals als Steuersignal eines diesem Verzögerungsglied vorstehend angeordneten Verzögerungsglieds zusammen geschaltet ist. Als Steuersignal der nachgeschalteten Verzögerungsglieder dient somit das Vergleichssignal des vorstehenden Verzögerungsglieds.

Unter dem Begriff "geschaltet" wird verstanden, dass die Schaltung so ausgelegt ist, dass Werte oder Zustände von einem Ausgang einer Komponente direkt über eine Leitung oder indirekt über gegebenenfalls zwischengeordnete Komponenten einem Eingang der anderen betroffenen Komponente angelegt werden. Insbesondere ist unter dem Begriff somit eine Leitung zu verstehen, welche die entsprechenden Aus- und Eingänge miteinander verbindet.

Alternativ dazu oder auch in Kombination damit kann bei einer Schaltung ein Ausgang zum Ausgeben des Steuersignals des Zeitgebers mit auch an einen Eingang zumindest des zweiten der Verzögerungsglieder geschaltet sein und die Verzögerungsglieder können ausgestaltet oder gesteuert sein durch zueinander unterschiedlich lange Verzögerungsdauer unterschiedlich verzögerte Vergleichssignale bereitzustellen. Alternativ kann das Steuersignal somit auch an zueinander parallel geschaltete Verzögerungsglieder angelegt werden, welche insbesondere eine jeweils um einen gewünschten Quotientenwert längere Verzögerung vornehmen. Bei einer solchen Ausgestaltung wird zweckmäßig durch z.B. zusätzliche Diodenschaltungen ein Stromfluss zwischen den Eingängen der verschiedenen Verzögerungsglieder unterbunden, so dass kein Strom aus einem Kondensator eines der Verzögerungsglieder in ein anderes der Verzögerungsglieder fließen kann.

Bei derartigen Schaltungen weist bevorzugt zumindest ein Teil der Verzögerungsglieder einen Operationsverstärker auf, der ausgestaltet oder gesteuert ist zum Ausgeben des Verzögerungssignals am Ausgang des Verzögerungsglieds mit dem gleichen Wert oder Zustand wie dem Wert oder Zustand des dem Verzögerungsglied anliegenden Steuersignals oder Vergleichsignals. Vorteilhaft ist dadurch, dass die Verzögerungsglieder alle gleich aufgebaut werden können und alle eine jeweils gleich lange Verzögerung bis zur Ausgabe des von diesen erzeugten Vergleichssignals bewirken.

Der Zeitgeber kann vorteilhaft ausgestaltet oder gesteuert sein, bei einem Flankenwechsel des Zähltakts das Steuersignal mit einem ersten definierten Zustand bereitzustellen und einen Ausgang zum Ausgeben des Steuersignals aufweisen, der an zumindest das erste der Verzögerungsglieder geschaltet ist. Insbesondere handelt es sich bei dem ersten definierten Zustand somit um einen fest vorgegebenen Spannungswert ungleich Null, welcher ein kontinuierliches und gleichmäßiges Aufladen einer kapazitiven Komponente, insbesondere eines Kondensators, des nachfolgenden Verzögerungsglieds ermöglicht.

bevorzugt ist eine solche Schaltung, bei welcher der Zeitgeber ausgestaltet oder gesteuert ist, vor einem übernächsten Flankenwechsel des Zähltakts das Steuersignal mit einem zweiten Zustand bereitzustellen und einen/den Ausgang zum Ausgeben des Steuersignals aufweist, der an zumindest das erste der Verzögerungsglieder geschaltet ist. Insbesondere handelt es sich bei dem zweiten, insbesondere auch fest definierten Zustand um einen Spannungswert gleich Null. Wichtig hierbei ist somit, dass das Beenden des ersten Zustands des Steuersignals vor Ablauf einer Periode des Zähltaktes seit dem einleitenden Flankenwechsel erfolgt. Im Fall einer einleitenden fallenden Flanke ist dies entsprechend ein Zeitpunkt vor der nächsten fallenden Flanke des Zähltaktes.

Bei einer solchen Schaltung, ist der Zeitgeber bevorzugt ausgestaltet oder gesteuert, das Steuersignal mit dem zweiten Zustand zu einem Rückschalt-Zeitpunkt bereitzustellen, welcher einerseits kleiner einer Taktperiode des Zähltaktes ist und andererseits größer einem Quotienten mit einem vorgegebenen Nenner und einem Zählerwert gleich dem Nenner minus 1 ist, wobei der Nenner gleich einer Anzahl der Verzögerungsglieder oder Anzahl der Komparatoren oder Anzahl der Vergleichsergebnisse ist. Durch eine solche Schaltung bzw. eine dementsprechende Verfahrensweise ist die Genauigkeit der Bestimmung des Differenzwertes auf einfache Art und Weise mit der Anzahl der Verzögerungsglieder bzw. Verzögerungssignale verknüpfbar.

Vorteilhaft sind in einer solchen Schaltung die Verzögerungsglieder ausgestaltet mit einem Widerstands-Kapazitäts-Glied, an welches ein Ausgang des Zeitgebers, welcher das Steuersignal ausgibt, oder ein Ausgang eines vorhergehenden Verzögerungsglieds, welches dessen Vergleichssignal ausgibt, geschaltet ist. Gemäß einer Ausgestaltung mit in Reihe gestalteten Verzögerungsgliedern wird somit an das erste der Verzögerungsglieder das Steuersignal des Zeitgebers angelegt, während an die nachfolgenden Verzögerungsglieder als deren Steuersignal jeweils das Verzögerungssignal des vorhergehenden Verzögerungsgliedes angelegt wird. Je nach Wert bzw. Intensität des den nachfolgenden Verzögerungsgliedern anliegenden Steuersignals bzw. Verzögerungssignals ist gegebenenfalls eine zusätzliche Verstärkung oder eine angepasste Auslegung des Verhältnisses von Widerstand und Kapazität des Widerstands-Kapazitäts-Glieds zweckmäßig.

Gemäß einer Ausgestaltung mit zueinander parallel geschalteten Verzögerungsgliedern wird jedem der Verzögerungsglieder als Eingangssignal das Steuersignal des Zeitgebers angelegt.

Dabei sind die Verzögerungsglieder bevorzugt ausgestaltet mit einem Gatter, welches ausgestaltet ist das Ausgeben des Vergleichssignals zu einem Zeitpunkt zu bewirken, zu dem eine kapazitive Komponente des Widerstands-Kapazitäts-Glieds einen vordefiniert erreichten Spannungswert erreicht hat. Ein solches Gatter kann insbesondere in einem dem Widerstands-Kapazitäts-Glied nachgeschalteten Operationsverstärker ausgestaltet sein. Optional kann auch ein so genannter Schmitt-Trigger ausgebildet sein, welcher vorzugsweise als Operationsverstärker ein definiertes Vergleichssignal ausgibt, wenn ein vorgegebener Kapazitätswert erreicht ist und somit die Zeitdauer der Verzögerung bis zum Ausgeben des Vergleichssignals verstrichen ist.

Insbesondere ist bei einer solchen Schaltung zumindest ein Rücksetzschalter schaltbar, beim abschließenden Zähltakt-Zustandswechsel einer Periode des Zähltaktes oder einem davon abhängigen Zähltakt-Zustandswechselsignal die Widerstands-Kapazitäts-Glieder, insbesondere Kondensatoren in diesen, zu löschen, insbesondere auf einen Masseanschluss zu legen.

Ein Register kann Registerplätze aufweisen, welche zum Aufnehmen der Vergleichsergebnisse der Komparatoren geschaltet sind.

Bevorzugt wird demgemäß auch ein Verfahren zum Bestimmen eines Wertes, insbesondere einer Dauer, eines Messsignals, bei dem bei einem ersten Zähltakt-Zustandswechsel eines Zähltakts ein Steuersignal bereitgestellt wird, auf Basis des Steuersignals zeitlich zueinander unterschiedlich verzögerte Vergleichssignale erzeugt werden, jedes der unterschiedlich verzögerten Vergleichssignale mit dem momentan anliegenden Messsignal verglichen wird und als Ergebnis der Vergleiche eine der Anzahl der Vergleichssignale entsprechende Anzahl von Vergleichsergebnissen bestimmt wird, wobei die Abfolge der Vergleichsergebnisse einen Differenzwert des Messsignals bildet. Insbesondere wird das Steuersignal zumindest an ein erstes von zumindest zwei Verzögerungsgliedern angelegt.

Verfahrensgemäß ist vorteilhaft, wenn bei einem abschließenden Zähltakt-Zustandswechsel nach einer Periode des Zähltaktes oder einem davon abhängigen Zähltakt-Zustandswechselsignal die Vergleichsergebnisse als der zu bestimmende Differenzwert ausgelesen werden und ein die Vergleichsergebnisse speicherndes Register und Widerstands-Kapazitäts-Glieder der Verzögerungsglieder gelöscht werden.

Der derart bereitgestellte Differenzwert wird bevorzugt zu einem ganzzahligen Zählwert des Messsignals hinzuaddiert, wobei der Zählwert einer gezählten Anzahl von bis zum Zähltakt der Bestimmung des Differenzwertes gezählten Perioden des Zähltakts entspricht.

So wird ein Zählwert bereitgestellt, welcher nicht nur eine ganzzahlige Anzahl von gezählten Takten, sondern zusätzlich einen darüber hinaus bestimmten Anteilswert des dem letzten ganzzahligen Zählwert nachfolgenden Taktes entspricht. Zu der Addition des Differenzwertes zu dem Zählwert des Zähltaktes der das Verfahren einleitenden Flanke ist insbesondere äquivalent ein Abziehen des Wertes 1 minus dem Differenzwert von dem Zählwert des Zähltaktes nach Beendigung des Zähltaktes der Differenzwertbestimmung.

Eigenständig vorteilhaft ist demgemäß auch ein System mit einem Sensor mit einer Messwerterfassungskomponente, welche ein Messsignal, insbesondere eine Messfrequenz ausgibt, und mit einer Schaltung nach einem vorstehenden Anspruch zum Bestimmen einer Dauer oder eines Wertes des Messsignals. Besonders vorteilhaft ist dabei ein System, welches einen Sensor und eine entsprechende Schaltung aufweist. Dabei kann die Schaltung bereits in einem Steuerungsmodul des Sensors selber in dem Sensor integriert sein. Prinzipiell möglich ist aber auch ein mehr-komponentiges System, bei welchem ein von einem Sensor geliefertes Signal in einem dazu getrennten Auswertegerät empfangen und ausgewertet wird. In einem solchen Fall wäre die Schaltung in dem separaten Gerät angeordnet.

Somit werden eine Schaltung und ein Verfahren bereitgestellt, welche auf einfache Art und Weise ohne eine Veränderung von Messzeit bzw. Messdauer und bei gleicher Taktrate eine Auflösungserhöhung bewirken, indem zwischen die Timer-Stände bzw. Dauern der Taktperioden des Zähltaktes gezoomt wird. Beispielsweise wird dabei als Schaltkriterium der Wechsel des Zustands einer Flanke von hoch nach tief der Messfrequenz bzw. des Messsignals gewählt. Es ist jedoch nicht bekannt, zu welchem genauen Zeitpunkt die Messfrequenz bzw. der Zustand des Messsignals innerhalb der Taktperiode tatsächlich vom hohen in den tiefen Zustand wechselt. Mit der schaltungsgemäß zusätzlichen Hardware aus insbesondere den Widerstands-Kapazitäts-Gliedern und den Komparatoren lässt sich jedoch ein Vergangenheitswert in Form des Differenzwertes feststellen. Dieser wird, nachdem das Messsignal vom hohen in den tiefen Zustand wechselte, zusätzlich zu einem ganzzahligen Wert der Anzahl gezählter Zähltakte ausgelesen. Mit der dargestellten Anordnung wird somit eine Erhöhung der Auflösung von 14 Bit auf 16 Bit erreicht, wenn vier Verzögerungsglieder und Komparatoren vorgesehen werden. Durch Verwendung weiterer Gatter lässt sich der Bereich bei gleicher Messzeit noch weiter auflösen.

Vorzugsweise werden die Flanken des Zeitgebers auf eine Reihe von Widerstands-Kapazitäts-Gliedern gegeben. Dadurch entstehen verzögerte Signale. Diese Signale werden auf einen Komparator gegeben, der sein Signal an ein Register weitergibt. Abhängig davon, zu welchem Zeitpunkt das Messsignal seinen Flankenwechsel hatte, entsteht im Register die feinere Auflösung.

Eine solche Schaltung und ein solches Verfahren ermöglichen auf einfache Art und Weise als Messsignal-Schaltkriterium einen Zustandswechsel des Messsignals (ms) insbesondere vom hohen in den tiefen Zustand zu erfassen und als Zähltakt-Schaltkriterium einen Zustandswechsel des Zähltakts (clk) insbesondere vom hohen in den tiefen Zustand zu erfassen.

Durch entsprechende Umgestaltung der Schaltungsanordnung oder Verfahrensweise sind aber auch Zustandswechsel vom tiefen in den hohen Zustand als die Schaltkriterien einsetzbar.

Ein Ausführungsbeispiel wird nachfolgend anhand der Zeichnung näher erläutert. Es zeigen:
- Fig. 1: schematisch einen Signalverlauf sowie bevorzugte Komponenten zur Auswertung des Signalverlaufs und
- Fig. 2: über der Zeit aufgetragene Signalverläufe von verschiedenen Signalen und Zuständen der Schaltungsanordnung gemäß Fig. 1.

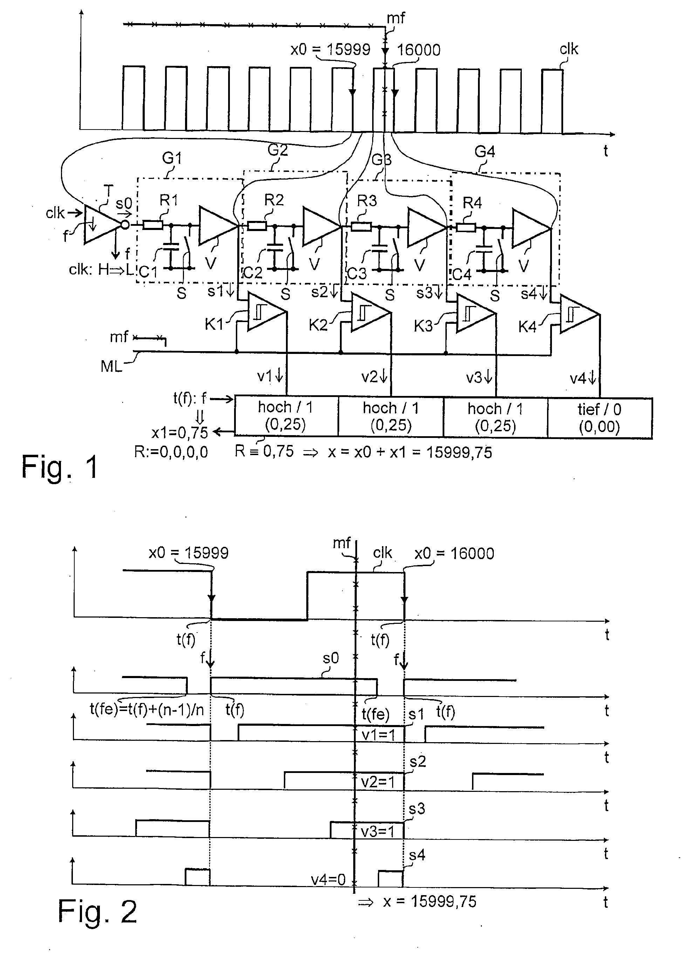

Fig. 1 zeigt in dem oberen Abschnitt einen beispielhaften Signalverlauf eines Messsignals mf über der fortschreitenden Zeit t aufgetragen. Außerdem ist über der Zeit t ein Zähltakt clk aufgetragen, welcher in einer bevorzugten Schaltungsanordnung abgreifbar zur Verfügung steht oder durch die Schaltung erzeugt wird. Mittels des Zähltaktes clk soll die Dauer des Messsignals mf bzw. eine Messfrequenz bestimmt werden.

Für den beispielhaft dargestellten Fall wird angenommen, dass mit der abfallenden Flanke des Messsignals mf von einem ersten Zustand in einen zweiten Zustand des Messsignals mf seit einem Beginn des Zustands dieses Messsignals mf 15.999 ganzzahlige Zählwerte x0 des Messsignals mf bzw. der Messfrequenz verstrichen sind. Das Ende des Messsignals mf bzw. dessen vom hohen Zustand in den tiefen Zustand wechselnde Flanke liegt jedoch zwischen diesem und einem nachfolgenden ganzzahligen Zählwert x0, so dass eine Genauigkeit der Bestimmung so nur im Rahmen einer Genauigkeit einer Taktperiode des Zähltaktes clk bestimmbar ist. Im unteren Teil von Fig. 1 ist eine beispielhafte Schaltungsanordnung zur Bestimmung eines Differenzwertes x1 skizziert, welcher eine genauere Bestimmung hinsichtlich des Zeitpunkts des Abfallens der Flanke des Messsignals mf innerhalb der Taktperiode des Zähltaktes clk ermöglicht, welche dem letzten ganzzahligen Zählwert x0 folgt.

Die Schaltungsanordnung weist einen Zeitgeber T auf, welcher geschaltet oder gesteuert ist, immer dann ein Zähltakt-Zustandswechselsignal f auszugeben, wenn eine Taktperiode des Zähltaktes clk erfasst wird. Bei der vorliegend beispielhaften Flanke zum Auslösen des Zähltakt-Zustandswechselsignals f handelt es sich beispielhaft um die vom Zustand 'hoch' H in den Zustand 'tief' L abfallenden Flanken des Zähltaktes clk.

Gemäß einer dargestellten ersten bevorzugten Ausgestaltung wird das Steuersignal s0 einem ersten Verzögerungsglied G1 einer Gruppe von in Reiher geschalteter Verzögerungsglieder G1, G2, G3, G4 angelegt. Das Verzögerungsglied G1 bewirkt eine gegenüber dem Zeitpunkt des Anlegens des Steuersignals s0 verzögerte Ausgabe eines ersten Vergleichssignals s1.

Das erste Vergleichssignal s1 wird als ein Steuersignal sowohl dem zweiten der Verzögerungsglieder G2 als auch einem Eingang eines ersten Vergleichers bzw. Komparators K1 angelegt. In gleicher Weise wird durch das zweite der Verzögerungsglieder G2 zeitlich verzögert zum Anlegen des Steuer- bzw. Vergleichssignals s1 an dessen Eingang durch dessen Ausgang ein zeitlich verzögertes zweites Vergleichssignal s2 ausgegeben. Das zweite Vergleichssignal s2 wird entsprechend an einen Eingang eines weiteren Komparators K2 und zusätzlich an einen Eingang eines dritten der Verzögerungsglieder G3 angelegt. Das dritte der Verzögerungsglieder G3 erzeugt in gleicher Weise ein zeitlich versetztes drittes Vergleichssignal s3, welches wiederum einem dritten Komparator K3 und dem vierten der Verzögerungsglieder G4 angelegt wird. Ein durch das vierte der Verzögerungsglieder G4 erzeugtes viertes Vergleichssignal s4 wird lediglich einem noch weiteren Komparator K4 angelegt.

Den Komparatoren K1 - K4 werden somit an deren jeweils erstem Eingang zeitlich versetzt die Vergleichssignale s1 - s4 angelegt. An einen zweiten Eingang wird den Komparatoren K1 - K4 jeweils über eine Messsignalleitung ML das momentane Messsignal mf angelegt. Die Komparatoren K1 - K4 sind vorzugsweise als Schmitt-Trigger ausgebildet und geben ein jeweiliges Vergleichsergebnis v1 - v4 aus.

Bei der bevorzugten Ausgestaltung wird als Vergleichsergebnis v1 - v4 immer dann ein hoher Zustand oder ein Wert 1 ausgegeben, wenn sowohl das anliegende Vergleichssignal s1 - s4 als auch das momentan anliegende Messsignal mf sich im Zustand 'hoch' befinden. Anderenfalls wird als das Vergleichsergebnis v4 ein Zustandswert 'tief' oder ein Wert 0 ausgegeben. Die Vergleichsergebnisse v1 - v3 befinden sich somit in einem hohen Zustand oder auf dem Wert 1, solange sich das Messsignal mf in hohem Zustand befindet. Nach dem Wechsel des Messsignals mf in den tiefen Zustand ist das Vergleichsergebnis v4 im tiefen Zustand bzw. auf den Wert 0 gesetzt.

Die Vergleichsergebnisse der Komparatoren K1 - K4 werden vorzugsweise in Registerplätze eines Registers R gespeichert. Für den beispielhaften Fall weisen die Registerplätze abschließend zum Ende der Taktperiode des Zähltaktes clk die Werte R=1,1,1,0 auf. Da die Taktperiode des Zähltaktes clk durch eine derartige Anordnung mit beispielhaft vier Verzögerungsgliedern G1 - G4 vierfach unterteilt wird, entspricht der Wert eines jeden der Register einem Viertel der Dauer einer Taktperiode.

Für den beispielhaften Fall bedeutet dies, dass die Dauer des Messsignals mf um einen Wert von 3 mal 0,25, das heißt um 0,75 länger ist, als ein Zeitpunkt t(f) des die Untersuchung auslösenden Zähltakt-Zustandswechsels, zu welchem das Zähltakt-Zustandswechselsignal f ausgegeben wurde. Somit ergibt sich als aufaddierbarer Wert x des Messsignals mf bzw. von dessen Dauer eine Summe aus dem ganzzahligen Zählwert x0 und dem derart aus dem Register R auslesbaren Differenzwert x1, so dass gilt: x = x0 + x1 = 15999,75.

In digitaler Darstellung entspricht dies einer Erhöhung einer Auflösung von 14 Bit auf 16 Bit bei Verwendung von vier Verzögerungsgliedern. Für eine weitere Erhöhung der Auflösung können mehr derartige Verzögerungsglieder hintereinander geschaltet werden.

Mit der nächsten fallenden Flanke des Zähltaktes clk bzw. dem Erzeugen des nächsten Zähltakt-Zustandswechselsignals f wird das Register R ausgelesen und gelöscht, so dass in allen Registerplätzen der Startwert 0 steht. Außerdem wird mit dem Anlegen des Zähltakt-Zustandswechselsignals f mittels zumindest eines Rücksetzschalters S, vorzugsweise mittels einem Rücksetzzustandsschalter S pro Verzögerungsglied G1 - G4 eine kapazitive Komponente gelöscht, insbesondere auf Masse gelegt.

Die kapazitiven Komponenten sind beispielhaft als Kondensatoren C1 - C4 ausgebildet und Bestandteil jeweils eines Widerstands-Kapazitäts-Glieds R1, C1; R2, C2; R3, C3; R4, C4 mit jeweils zumindest einer Ohm' schen Komponente, beispielsweise den Widerständen R1 - R4, und einer kapazitiven Komponente in Form der Kondensatoren C1 - C4. Den Widerstands-Kapazitäts-Gliedern R1, C1; R2, C2; R3, C3; R4, C4 der Verzögerungsglieder G1 - G4 wird jeweils das Steuersignal angelegt, das heißt im ersten Fall das Steuersignal s0 des Zeitgebers T bzw. im Fall der weiteren Verzögerungsglieder G2 - G4 das Vergleichssignal s1 - s3 des vorgeschalteten Verzögerungsglieds G1 - G3. Beispielhaft wird dabei das jeweilige Steuer- bzw. Vergleichssignal s0 - s3 jeweils einem entsprechenden Eingang der Widerstandskomponente angelegt, während ein Ausgang der Widerstandskomponente sowohl an der kapazitiven Komponente als auch an einem Eingang eines Verstärkers V, insbesondere Operationsverstärkers, anliegt. Ein zweiter Eingang der kapazitiven Komponente liegt auf einem Masseanschluss. Der zugeordnete Rücksetzschalter S legt den Masseanschluss zum Löschen auf den Verbindungspunkt zwischen der kapazitiven und der Ohm'schen Komponente.

Der Verstärker dient zum Verstärken des sich in der kapazitiven Komponente aufbauenden Spannungswertes und Ausgeben des entsprechenden Vergleichssignals s1 - s4.

Der Verstärker V kann dabei beispielhaft auch ein Gatter aufweisen, welches das entsprechende Vergleichssignal erst dann ausgibt, wenn am Eingang des Verstärkers ein ausreichend angestiegener Spannungswert der kapazitiven Komponente anliegt. Dadurch können vorteilhaft baugleiche Verzögerungsglieder in Reihe geschaltet werden. Außerdem können auch baugleiche Komparatoren K1 - K4 verwendet werden.

Auch alternative Ausgestaltungen sind prinzipiell umsetzbar. Im Fall eines Vergleichssignals s1 - s4, welches kontinuierlich abhängig von einem momentanen Spannungswert der kapazitiven Größe ausgegeben wird, würden die Komparatoren K1 - K4 entsprechend so geschaltet, dass bei Überschreiten eines vorgegebenen Spannungswertes ein Vergleich mit dem momentan anliegenden Messsignal mf durchgeführt werden würde. Zu berücksichtigen wäre dann beispielsweise auch, dass die Vergleichssignale der aufeinanderfolgenden Verzögerungsglieder mit jeweils geringerem Spannungswert ausgegeben werden würden.

Fig. 2 zeigt über der Zeit t aufgetragen Zustände verschiedener der anhand Fig. 1 beschriebenen Signale.

In der oberen Zeile ist eine Periode des Zähltaktes clk beginnend mit einer ersten fallenden Flanke zu einem ersten Zeitpunkt t(f) des Zähltakt-Zustandswechsels und endend mit einem Zeitpunkt t(f) eines nachfolgenden Zähltakt-Zustandswechsels dargestellt. Zu diesen Zeitpunkten wird jeweils das Zähltakt-Zustandswechselsignal f ausgegeben. Dargestellt ist somit ein Ausschnitt des Zähltaktes clk beginnend mit dem ganzzahligen Zählwert x0 15999 und endend mit dem ganzzahligen Zählwert x0 16000 des Zähltaktes clk.

In der zweiten Zeile ist das Steuersignal s0 dargestellt, welches vom Zeitgeber T ausgegeben wird. Das Steuersignal s0 wechselt jeweils mit dem Anlegen bzw. Erzeugen oder Zeitpunkt des Zähltakt-Zustandswechselsignals f vom tiefen in den hohen Zustand. Das Steuersignal s0 wird vorzugsweise mit einem ersten definierten Zustand bereitgestellt.

Eine Dauer des ersten definierten Zustands des Steuersignals s0 hängt von der Anzahl der Verzögerungsglieder G1 - G4 ab. In jedem Fall ist es kürzer als eine vollständige Taktperiode des Zähltaktes clk. Außerdem ist das Steuersignal s0 größer bzw. länger als ein Quotient mit einem vorgegebenen Nenner n und einem Zählerwert, wobei der Zählerwert gleich dem Nenner n minus 1 ist und wobei der Nenner n gleich einer Anzahl der Verzögerungsglieder G1 - G4 oder Anzahl der Komparatoren K1 - K4 oder Anzahl der Vergleichsergebnisse v1 - v4 ist. Ein Rückschalt-Zeitpunkt t(fe) des bevorzugten Wechsels des Steuersignals s0 in den anderen, zweiten definierten Zustand, insbesondere ein Wechsel vom Zustand 'hoch' in den Zustand 'tief' oder vom Zustand 1 in den Zustand 0 lässt sich somit bestimmen gemäß t(fe) = t(f) + (n-1) /n.

In der dritten Zeile ist ein zeitlicher Verlauf des ersten Vergleichssignals s1 dargestellt, welches vorzugsweise wiederum zwischen einem tiefen und einem hohen Zustand bzw. den Zustandswerten 0 und 1 wechselt. Eine ansteigende Flanke des ersten Vergleichssignals s1 hängt von dem Ladungsverlauf des Widerstands-Kapazitäts-Glieds R1, C1 in dem ersten Verzögerungsglied G1 ab. Dieses ist derart dimensioniert bzw. ausgestaltet, dass die ansteigende Flanke des ersten Vergleichssignals s1 möglichst nah und bei dem Zeitpunkt und vor dem Zeitpunkt eines Viertels der Periode des Zähltaktes clk liegt. Ein Rücksetzen in den tiefen Zustand des ersten Vergleichssignals s1 erfolgt mit dem nächsten Zähltakt-Zustandswechselsignal f bzw. zu dem nächsten Zeitpunkt t(f) des Zähltakt-Zustandswechsels.

In den nachfolgenden Zeilen sind die Zustände der drei weiteren Vergleichssignale s2 - s4 dargestellt, welche in vergleichbarer Art und Weise erzeugt werden wie das erste Vergleichssignal s1. Jedoch liegt die ansteigende Flanke jeweils um eine Dauer entsprechend einem Viertel der Taktperiode des Zähltaktes clk zeitlich verzögert.

Dargestellt ist außerdem durch eine senkrechte Linie der Zeitpunkt der Flanke bzw. des Zustandswechsels des Messsignals mf. Dieser Zeitpunkt liegt beispielhaft in einem Zeitbereich während des letzten Viertels der Taktperiode des Zähltaktes clk. Dadurch ergeben sich jeweils Signalzustände im hohen Zustand für die ersten drei Vergleichssignale s1 - s3 und das Messsignal mf, was für deren Vergleichsergebnisse v1 - v3 jeweils einem Wert 1 entspricht, der in die ersten drei Registerplätze des Registers R geschrieben wird. Während der Dauer des Zustands 'hoch' bzw. '1' des vierten Vergleichssignals s4 befindet sich der Zustand des Messsignals mf jedoch im Zustand 'tief', so dass das Vergleichsergebnis v4 im vierten Komparator K4 den Wert 0 bewirkt, welcher in den vierten Registerplatz des Registers R geschrieben wird.

Vom Grundgedanken der Schaltungsanordnung und Verfahrensweise her werden somit Verzögerungssignale erzeugt, welche hinsichtlich ihres Zustands mit einem Wert des Messsignals verglichen werden, um so die Zeitdauer einer Taktperiode des Zähltakts clk feiner zu untergliedern. Zur Erreichung dieses Ziels können auch grundlegende Modifikationen der beispielhaft dargestellten Schaltungsanordnung und Verfahrensweise durchgeführt werden.

Beispielsweise können gemäß einer nicht dargestellten alternativen Ausgestaltung die vier Verzögerungsglieder G1 - G4 nicht in Reihe, sondern parallel zueinander geschaltet werden. Im Fall einer solchen Parallelschaltung würde das Steuersignal s0 dem Eingang eines jeden solcher parallel geschalteter Verzögerungsglieder angelegt werden. Zweckmäßigerweise würde durch eine zusätzliche Diode ein Rückfließen eines Stroms aus der kapazitiven Komponente eines solchen Verzögerungsglieds in die anderen der Verzögerungsglieder verhindert werden.

Gemäß einer weiteren alternativen Ausgestaltung kann beispielsweise ein einziger Komparator anstelle einer Vielzahl von Komparatoren K1 - K4 verwendet werden. Zur Umsetzung würden dann zeitlich nacheinander versetzt die Ausgänge der verschiedenen Verzögerungsglieder G1 - G4 an den einen Komparator angelegt werden.

Natürlich kann auch ein anderer zeitlicher Ablauf in Verbindung mit dem Löschen gewählt werden. Insbesondere vorteilhaft kann auch ein Auslesen und Löschen des Registers R sowie ein Löschen des Widerstands-Kapazitäts-Glieds der jeweiligen Verzögerungsglieder kurz vor dem Zeitpunkt des Zustandswechsels des Zähltaktes clk durchgeführt werden.

### Bezugszeichenliste:

- clk: Zähltakt
- C1 - C4: Kondensatoren
- f: Zähltakt-Zustandswechselsignal
- G1 - G4: Verzögerungsglieder
- H: Zustand "hoch" eines Signals oder Wertes
- K1 - K4: Komparator
- L: Zustand "tief" eines Signals oder Wertes
- ML: Messsignalleitung
- ms: Messsignal
- n: Nenner, gleich Anzahl der Verzögerungsglieder
- R: Register
- s0: Steuersignal
- s1 - s4: Vergleichssignale
- R1 - R4: Widerstände
- S: Rücksetzschalter
- t: fortschreitende Zeit
- t(f): Zeitpunkt des Zähltakt-Zustandswechsels
- t(fe): Rückschalt-Zeitpunkt
- T: Zeitgeber
- v1 - v4: Vergleichsergebnisse
- V: Verstärker
- x: Wert des Messsignals bzw. einer Messfrequenz
- x0: ganzzahliger Zählwert des Messsignals bzw. der Messfrequenz
- x1: Differenzwert des Messsignals bzw. der Messfrequenz

## Patentansprüche

1. Schaltung zum Bestimmen eines Wertes (x), insbesondere einer Dauer, eines Messsignals (ms), bei welcher
- ein Zeitgeber (T) ausgestaltet oder gesteuert ist bei einem ersten Zähltakt-Zustandswechsel eines Zähltakts (clk) ein Steuersignal (s0) an zumindest ein erstes von zumindest zwei Verzögerungsgliedern (G1, G2, G3, G4) anzulegen,
- die Verzögerungsglieder (G1, G2, G3, G4) ausgestaltet oder gesteuert sind zeitlich zueinander unterschiedlich verzögerte Vergleichssignale (s1, s2, s3, s4) zu erzeugen und
- eine Komparatoranordnung mit zumindest einem Komparator (K1, K2, K3, K4), wobei ein jeweils erster Komparatoreingang zum Anlegen eines dieser unterschiedlich verzögerten Vergleichssignale (s1; s2; s3; s4) geschaltet ist und ein jeweils zweiter Komparatoreingang zum Anlegen des Messsignals (ms) geschaltet ist, ausgelegt oder gesteuert ist aus dem jeweils anliegenden Vergleichssignal (s1; s2; s3; s4) und dem Messsignal (ms) jeweils ein Vergleichsergebnis (v1, v2, v3, v4) zu bestimmen,
- wobei die Abfolge der Vergleichsergebnisse (v1, v2, v3, v4) einen Differenzwert (x1) des Messsignals (ms) bildet.

2. Schaltung nach Anspruch 1, bei welcher von einem zweiten oder weiteren solchen Verzögerungsglied (G2; G3; G4) ein Eingang zum Anlegen des Steuersignals mit einem Ausgang zum Ausgeben des Vergleichssignals (s1, s2, s3) als Steuersignal (s1; s2; s3) eines diesem Verzögerungsglied (G2; G3; G4) vorstehend angeordneten Verzögerungsglieds (G1; G2; G3) geschaltet ist.

3. Schaltung nach Anspruch 1, bei welcher ein Ausgang zum Ausgeben des Steuersignals (s0) des Zeitgebers (T) mit auch an einen Eingang zumindest des zweiten der Verzögerungsglieder (G2; G3; G4) geschaltet ist und die Verzögerungsglieder (G1, G2, G3, G4) ausgestaltet oder gesteuert sind durch zueinander unterschiedlich lange Verzögerungsdauer unterschiedlich verzögerte Vergleichssignale (s1, s2, s3, s4) bereitstellen.

4. Schaltung nach einem vorstehenden Anspruch, bei welcher zumindest ein Teil der Verzögerungsglieder (G1, G2, G3, G4) einen Operationsverstärker aufweist, der ausgestaltet oder gesteuert ist zum Ausgeben des Verzögerungssignals am Ausgang des Verzögerungsglieds (G1, G2, G3, G4) mit dem gleichen Wert oder Zustand wie dem Wert oder Zustand des dem Verzögerungsglied (G1, G2, G3, G4) anliegenden Steuersignals (s0) oder Vergleichsignals (s1, s2, s3).

5. Schaltung nach einem vorstehenden Anspruch, bei welcher der Zeitgeber (T) ausgestaltet oder gesteuert ist, bei einem Flankenwechsel des Zähltakts (clk) das Steuersignal (s0) mit einem ersten definierten Zustand bereitzustellen und einen Ausgang zum Ausgeben des Steuersignals (s0) aufweist, der an zumindest das erste der Verzögerungsglieder (G1) geschaltet ist.

6. Schaltung nach einem vorstehenden Anspruch, bei welcher der Zeitgeber (T) ausgestaltet oder gesteuert ist, vor einem übernächsten Flankenwechsel des Zähltakts (clk) das Steuersignal (s0) mit einem zweiten Zustand bereitzustellen und einen/den Ausgang zum Ausgeben des Steuersignals (s0) aufweist, der an zumindest das erste der Verzögerungsglieder (G1) geschaltet ist.

7. Schaltung nach Anspruch 6, bei welcher der Zeitgeber (T) ausgestaltet oder gesteuert ist, das Steuersignal (s0) mit dem zweiten Zustand zu einem Rückschalt-Zeitpunkt (t(fe)) bereitzustellen, welcher einerseits kleiner einer Taktperiode des Zähltaktes (clk) ist und andererseits größer einem Quotienten mit einem vorgegebenen Nenner (n) und einem Zählerwert gleich dem Nenner minus 1 (n-1) ist, wobei der Nenner (n) gleich einer Anzahl der Verzögerungsglieder (G1 - G4) oder Anzahl der Komparatoren (K1, K2, K3, K4) oder Anzahl der Vergleichsergebnisse (v1, v2, v3, v4) ist.

8. Schaltung nach einem vorstehenden Anspruch, bei welcher die Verzögerungsglieder (G1, G2, G3, G4) ausgestaltet sind mit einem Widerstands-Kapazitäts-Glied (R1, C1; R2, C2; R3, C3; R4, C4), an welches ein Ausgang des Zeitgebers (T), welcher das Steuersignal (s0) ausgibt, oder ein Ausgang eines vorhergehenden Verzögerungsglieds (G1, G2, G3), welches dessen Vergleichssignal (s1, s2, s3) ausgibt, geschaltet ist.

9. Schaltung nach Anspruch 8, bei welcher die Verzögerungsglieder (G1, G2, G3, G4) ausgestaltet sind mit einem Gatter, welches ausgestaltet ist das Ausgeben des Vergleichssignals (s1, s2, s3, s4) zu einem Zeitpunkt zu bewirken, zu dem eine kapazitive Komponente des Widerstands-Kapazitäts-Glieds (R1, C1; R2, C2; R3, C3; R4, C4) einen vordefiniert erreichten Spannungswert erreicht hat.

10. Schaltung nach Anspruch 9 oder 10, bei welcher zumindest ein Rücksetzschalter (S) schaltbar ist, beim abschlie-βenden Zähltakt-Zustandswechsel einer Periode des Zähltaktes (clk) oder einem davon abhängigen Zähltakt-Zustandswechselsignal (f) die Widerstands-Kapazitäts-Glieder (R1, C1; R2, C2; R3, C3; R4, C4), insbesondere Kondensatoren (C1, C2, C3, C4) in diesen, zu löschen, insbesondere auf einen Masseanschluss zu legen.

11. Schaltung nach einem vorstehenden Anspruch, welche ein Register (R) mit Registerplätzen aufweist, welche zum Aufnehmen der Vergleichsergebnisse der Komparatoren (K1 - K4) geschaltet sind.

12. Verfahren zum Bestimmen eines Wertes (x), insbesondere einer Dauer, eines Messsignals (ms), bei dem
- bei einem ersten Zähltakt-Zustandswechsel eines Zähltakts (clk) ein Steuersignal (s0) bereitgestellt wird,
- auf Basis des Steuersignals (s0) zeitlich zueinander unterschiedlich verzögerte Vergleichssignale (s1, s2, s3, s4) erzeugt werden,
- jedes der unterschiedlich verzögerten Vergleichssignale (s1, s2, s3, s4) mit dem momentan anliegenden Messsignal (ms) verglichen wird und als Ergebnis der Vergleiche eine der Anzahl der Vergleichssignale (s1, s2, s3, s4) entsprechende Anzahl von Vergleichsergebnissen (v1, v2, v3, v4) bestimmt wird,
- wobei die Abfolge der Vergleichsergebnisse (v1, v2, v3, v4) einen Differenzwert (x1) des Messsignals (ms) bildet.

13. Verfahren nach Anspruch 12, bei dem bei einem abschlie-βenden Zähltakt-Zustandswechsel nach einer Periode des Zähltaktes (clk) oder einem davon abhängigen Zähltakt-Zustandswechselsignal (f) die Vergleichsergebnisse (v1, v2, v3, v4) als der zu bestimmende Differenzwert (x1) ausgelesen werden und ein die Vergleichsergebnisse (v1, v2, v3, v4) speicherndes Register (R) und Widerstands-Kapazitäts-Glieder (R1, C1; R2, C2; R3, C3; R4, C4) der Verzögerungsglieder (G1, G2, G3, G4) gelöscht werden.

14. Verfahren nach Anspruch 12 oder 13, bei dem der derart bereitgestellte Differenzwert (x1) zu einem ganzzahligen Zählwert (x0) des Messsignals (ms) hinzuaddiert wird, wobei der Zählwert (x0) einer gezählten Anzahl von bis zum Zähltakt der Bestimmung des Differenzwertes gezählten Perioden des Zähltakts (clk) entspricht.
So wird ein Zählwert bereitgestellt, welcher nicht nur eine ganzzahlige Anzahl von gezählten Takten, sondern zusätzlich einen darüber hinaus bestimmten Anteilswert des dem letzten ganzzahligen Zählwert nachfolgenden Taktes entspricht. Zu der Addition des Differenzwertes zu dem Zählwert des Zähltaktes der das Verfahren einleitenden Flanke ist insbesondere äquivalent ein Abziehen des Wertes 1 minus dem Differenzwert von dem Zählwert des Zähltaktes nach Beendigung des Zähltaktes der Differenzwertbestimmung.

15. System mit einem Sensor mit einer Messwerterfassungskomponente, welche ein Messsignal (ms), insbesondere eine Messfrequenz (ms) ausgibt, und mit einer Schaltung nach einem vorstehenden Anspruch zum Bestimmen einer Dauer oder eines Wertes (x) des Messsignals (ms).
